# EUROPEAN PATENT APPLICATION

(11) **EP 4 832 148 A1**
(43) Date of publication of application: **28.10.2026**
(21) Application number: 24907956.7
(22) Date of filing: 10.12.2024
(51) Int. Cl.: H01M 10/54, C01B 17/90, C22B 3/08, C22B 3/22

(54) **LITHIUM-CONTAINING AQUEOUS SULFURIC ACID SOLUTION AND METHOD FOR PREPARING SAME**

(30) Priority: 18.12.2023 KR 20230185233
(71) Applicant: POSCO Holdings Inc., Pohang-si, Gyeongsangbuk-do 37859 (KR)
(72) Inventor: KIM, Wanyi, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/020204
(87) International publication number: WO 2025/135672

(57) **Abstract**

The present invention relates to a sulfuric acid aqueous solution containing lithium and a method for manufacturing the same. The sulfuric acid aqueous solution of the present invention includes obtaining, from a waste battery, a composition for recovering valuable metals including a valuable metal alloy, a lithium compound, copper (Cu), and graphite; separating graphite from the composition for recovering valuable metals; sulfuric acid leaching valuable metals, the lithium compound, and copper (Cu) in the composition for recovering valuable metals; solid-liquid separating, in the leached sulfuric acid aqueous solution containing lithium, and recovering the valuable metals and copper (Cu); and removing residual impurities in the leached sulfuric acid aqueous solution containing lithium having undergone the recovering step.

## Description

### [TECHNICAL FIELD]

The present invention relates to a raw material for battery manufacture, and more particularly, to a sulfuric acid aqueous solution containing lithium obtained from a waste battery and a method for manufacturing the same.

### [BACKGROUND ART]

As demand for electric vehicles is becoming active worldwide, the issue of treating waste batteries generated from the electric vehicles is emerging as a social issue. In the case of lithium secondary batteries, which are a main raw material of the waste batteries, organic solvents, explosive materials, and heavy metal materials such as Ni, Co, Mn, and Fe are contained therein. However, Ni, Co, Mn, and Li have great scarcity value as valuable metals, and recovery and recycling processes after lithium secondary batteries are discarded are emerging as important research fields.

Specifically, a lithium secondary battery mainly includes copper and aluminum used as current collectors, Li-, Ni-, Co-, and Mn-containing oxides constituting a positive electrode material, and graphite used as a negative electrode material, and includes a separator for separating the positive electrode material and the negative electrode material and an electrolyte solution injected into the separator. Solvents constituting the electrolyte solution and solvents used as salts are mainly used by mixing carbonate-based organic materials such as ethylene carbonate and propylene carbonate, and, for example, LiPF₆ is used.

In order to utilize the waste battery, development of a waste battery recycling process is being actively conducted, in which the waste battery is shredded to generate an intermediate material such as waste battery shredded material or black powder, and then valuable metals are recovered through a subsequent process.

The recovered valuable metals undergo a process of recovering valuable metals in the battery, such as Li, Ni, Co, and Mn, through acid leaching. In the acid leaching, valuable metals in the battery are converted into an ionized state using an acid such as sulfuric acid, and a process for removing impurities is performed. Valuable metals such as Ni, Co, or Mn in the sulfuric acid from which impurities have been removed are extracted in the form of sulfides through solvent extraction and crystallization.

After sulfuric acid leaching, the Li content in the sulfuric acid becomes about 6 to 10 g/L, but after solvent extraction and crystallization of Ni, Co, Mn, and the like, Li remaining in the sulfuric acid is diluted to about 1 to 2 g/L. In order to manufacture a raw material for battery manufacture, specifically lithium, using a low-concentration Li-containing sulfuric acid aqueous solution, multistage impurity removal steps and Li concentration steps are performed. Li₂CO₃ or LiOH for battery manufacture must have a purity of 99.5% or more, and in order to obtain a material having the corresponding purity, high extraction cost is required, and there is a problem of reducing the Li recovery rate. Therefore, research on a method for solving the above problem is required.

In addition, as a method for obtaining lithium, a method may be performed in which, in order to extract lithium from a lithium-containing ore such as spodumene containing lithium, heat treatment is performed at about 900°C or higher, followed by leaching in sulfuric acid to remove impurities. However, this method has problems in that a large amount of precipitates is generated when impurities are removed, and excessive environmental treatment costs are required to landfill the precipitates.

In addition, among lithium-containing materials, a Li oxide (Li₂O) or fluoride (LiF) form present in a positive electrode material is vaporized as Li(g) or LiF(g) when exposed to high temperature, resulting in loss of lithium, and thus there is a problem that the recovery rate of lithium decreases.

### [DETAILED DESCRIPTION OF THE INVENTION]

### [Technical Problem]

A problem to be solved by the present invention is to provide a sulfuric acid aqueous solution containing lithium, which can be utilized as a raw material for manufacturing a lithium secondary battery and contains lithium at a high concentration.

Another technical problem to be solved by the present invention is to provide a method for manufacturing a sulfuric acid aqueous solution containing lithium, which can be utilized as a raw material for manufacturing a lithium secondary battery and contains lithium at a high concentration.

### [Technical Solution]

A sulfuric acid aqueous solution containing lithium according to one embodiment of the present invention is recovered from a waste battery, includes lithium (Li), aluminum (Al), nickel (Ni), cobalt (Co), manganese (Mn), and impurities as a balance, and may satisfy the following Formula 1. <Formula 1> $1.0 \leq \left[Al\right] = 0.0297 \times {\left[Li\right]}^{2} + 1.3205 \times \left[Li\right] \pm 5 \leq 16.0$ wherein, in Formula 1, [Li] and [Al] mean concentrations (g/L) of Li and Al, respectively, in the sulfuric acid aqueous solution containing lithium.

In one embodiment, the sulfuric acid aqueous solution may satisfy the following Formula 2. <Formula 2> $0.05 \leq \left[Ni\right] = 0.1907 \times {\left[Li\right]}^{2} - 0.2689 \times \left[Li\right] \pm 3 \leq 16.0$ wherein, in Formula 2, [Li] and [Ni] mean concentrations (g/L) of Li and Ni, respectively, in the sulfuric acid aqueous solution containing lithium.

In one embodiment, the sulfuric acid aqueous solution may satisfy the following Formula 3. <Formula 3> $0.05 \leq \left[Co\right] = 0.0624 \times {\left[Li\right]}^{2} - 0.1078 \times \left[Li\right] \pm 2 \leq 14.0$ wherein, in Formula 3, [Li] and [Co] mean concentrations (g/L) of Li and Co, respectively, in the sulfuric acid aqueous solution containing lithium.

In one embodiment, the sulfuric acid aqueous solution may satisfy the following Formula 4. <Formula 4> $0.1 \leq \left[Mn\right] = 0.0402 \times {\left[Li\right]}^{2} + 0.117 \times \left[Li\right] \pm 1 \leq 12.0$ wherein, in Formula 4, [Li] and [Mn] mean concentrations (g/L) of Li and Mn, respectively, in the sulfuric acid aqueous solution containing lithium.

A method for manufacturing a sulfuric acid aqueous solution containing lithium according to another embodiment of the present invention includes obtaining, from a waste battery, a composition for recovering valuable metals including a valuable metal alloy, a lithium compound, copper (Cu), and graphite; separating graphite from the composition for recovering valuable metals; sulfuric acid leaching valuable metals, the lithium compound, and copper (Cu) in the composition for recovering valuable metals; solid-liquid separating, in the leached sulfuric acid aqueous solution containing lithium, and recovering the valuable metals and copper (Cu); and removing residual impurities in the leached sulfuric acid aqueous solution containing lithium having undergone the recovering step.

In one embodiment, at least a portion of the lithium compound may contain lithium disposed on the valuable metal alloy. In one embodiment, obtaining the composition for recovering valuable metals may include preparing a battery containing lithium (Li), shredding the battery, and heat-treating the shredded battery shredded material in a range of 600 to 1,500°C.

In one embodiment, heat-treating the shredded battery shredded material in a range of 600 to 1,500°C may be performed in an oxygen concentration range of 0.1 to 2.0 vol%. In one embodiment, separating graphite from the composition for recovering valuable metals may be performed by at least one method among particle-size separation, specific-gravity separation, and flotation.

In one embodiment, sulfuric acid leaching the valuable metals, the lithium compound, and copper (Cu) in the composition for recovering valuable metals may control the pH of the sulfuric acid aqueous solution containing lithium to a range of 0.2 to 4.0. In one embodiment, in sulfuric acid leaching the valuable metals, the lithium compound, and copper (Cu) in the composition for recovering valuable metals, an equivalent ratio of the sulfuric acid may be 0.5 to 4.0.

In one embodiment, sulfuric acid leaching the valuable metals, the lithium compound, and copper (Cu) in the composition for recovering valuable metals may be performed in a temperature range of 10 to 150°C. In one embodiment, sulfuric acid leaching the valuable metals, the lithium compound, and copper (Cu) in the composition for recovering valuable metals may supply an inert gas at a supply rate of 0.1 to 20.0 Nm³/hr.

In one embodiment, between sulfuric acid leaching the valuable metals, the lithium compound, and copper (Cu) in the composition for recovering valuable metals and solid-liquid separating, in the leached sulfuric acid aqueous solution containing lithium, and recovering the valuable metals and copper (Cu), the method may include adding sodium hydroxide (NaOH) to remove impurities in the sulfuric acid aqueous solution containing lithium.

In one embodiment, removing impurities in the sulfuric acid aqueous solution may control the pH of the sulfuric acid aqueous solution to 3.0 to 8.0. In one embodiment, between solid-liquid separating, in the leached sulfuric acid aqueous solution containing lithium, and recovering the valuable metals and copper (Cu) and removing residual impurities in the leached sulfuric acid aqueous solution containing lithium having undergone the recovering step, the method may include removing impurities by an ion exchange method.

In one embodiment, removing residual impurities in the leached sulfuric acid aqueous solution containing lithium having undergone the recovering step may adjust the pH of the sulfuric acid aqueous solution containing lithium to a range of 8.5 to 12.0. In one embodiment, preparing the battery containing lithium (Li) may include freezing the battery.

### [Advantageous Effects]

The sulfuric acid aqueous solution containing lithium according to one embodiment of the present invention includes valuable metals at a predetermined ratio, and thus can be utilized as a raw material for manufacturing a lithium secondary battery and provides a sulfuric acid aqueous solution containing lithium at a high concentration.

The method for manufacturing a sulfuric acid aqueous solution containing lithium according to another embodiment of the present invention provides a method for manufacturing a sulfuric acid aqueous solution as a high-purity lithium-containing raw material for manufacturing a lithium-containing battery by sulfuric acid leaching, according to temperature and pH conditions, a lithium-containing compound processed and recovered from a lithium-containing battery and removing impurities.

### [BRIEF DESCRIPTION OF THE DRAWINGS]

FIG. 1 is a graph showing a change in battery voltage according to cooling temperature according to one embodiment of the present invention.
FIG. 2 is a graph showing a relationship among battery weight, external cooling temperature, and cooling time according to one embodiment of the present invention.
FIGS. 3A and 3B are photographs in which fire occurred when shredding was performed after freezing for a time shorter than a minimum cooling time according to a Comparative Example of the present invention, and FIGS. 3C and 3D are photographs of an Example in which fire did not occur when shredding was performed after freezing for a time longer than the minimum cooling time according to an Example of the present invention.

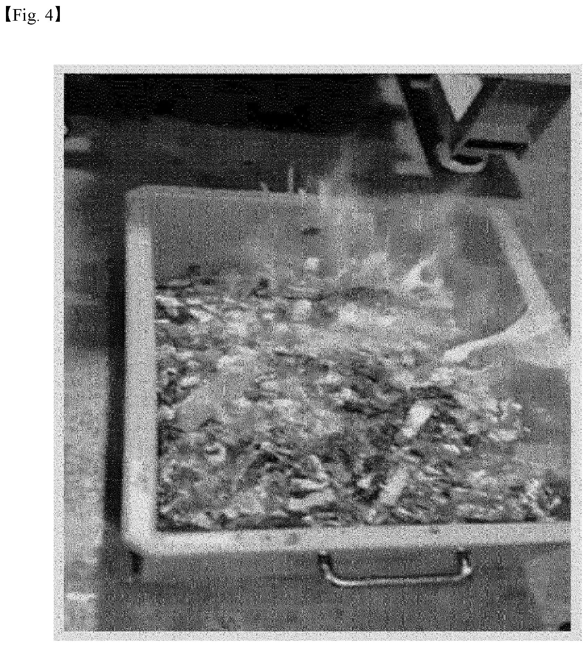

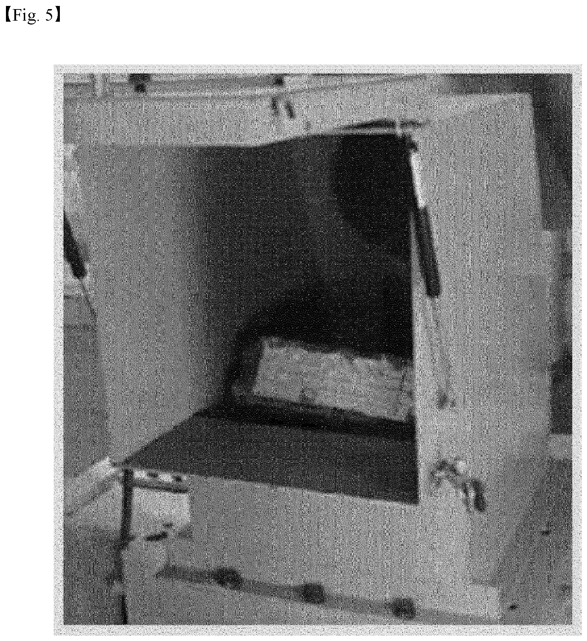

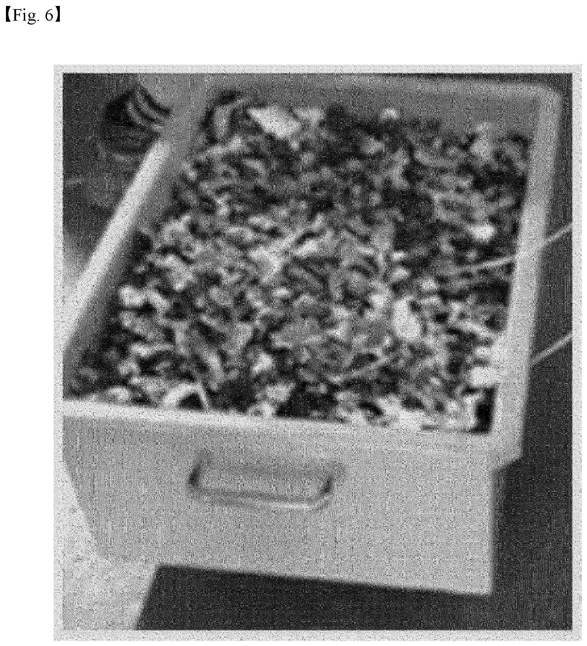

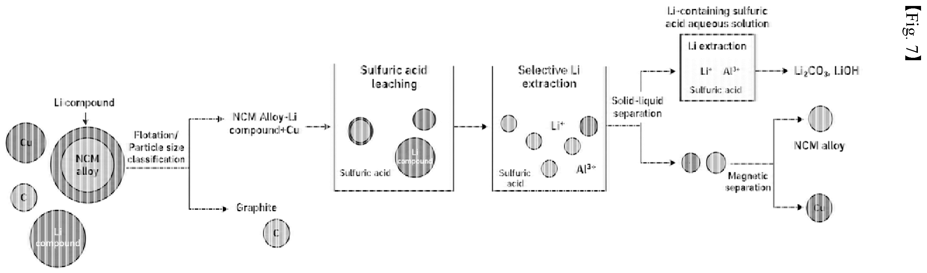

FIG. 4 is a schematic diagram of manufacturing a high-purity lithium-containing sulfuric acid aqueous solution according to one embodiment of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, in the present specification, % means wt% unless otherwise specified.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

The sulfuric acid aqueous solution containing lithium according to one embodiment of the present invention has lithium at a high concentration and may be utilized as a raw material for manufacturing lithium hydroxide used in manufacture of a positive electrode active material. Specifically, the sulfuric acid aqueous solution containing lithium may be recovered from a waste battery.

In one embodiment, the sulfuric acid aqueous solution containing lithium may include lithium (Li), aluminum (Al), nickel (Ni), cobalt (Co), manganese (Mn), and impurities as a balance. The impurities as the balance may include, for example, at least one of Ni, Co, Mn, Cu, Ti, Zn, Pb, P, Ca, Mg, B, K, Na, Si, Zr, and Fe.

In one embodiment, the sulfuric acid aqueous solution containing lithium may satisfy the following Formula 1. <Formula 1> $1.0 \leq \left[Al\right] = 0.0297 \times {\left[Li\right]}^{2} + 1.3205 \times \left[Li\right] \pm 5 \leq 16.0$ wherein, in Formula 1, [Li] and [Al] mean concentrations (g/L) of Li and Al, respectively, in the sulfuric acid aqueous solution containing lithium.

Formula 1 may be a relational expression for concentrations of Li and Al in the sulfuric acid aqueous solution containing lithium. Formula 1 may specifically satisfy 1.0 to 16.0, and more specifically 2.5 to 12.0. When Formula 1 is satisfied, the sulfuric acid aqueous solution can be usefully applied to manufacture of LiOH used for manufacturing a high-nickel positive electrode active material, and has an advantage of reducing material costs due to a high-concentration lithium concentration.

When Formula 1 is outside the upper limit value of the above-described range, there is a problem that leaching of lithium is delayed and the lithium recovery rate decreases. When Formula 1 is outside the lower limit value of the above-described range, there is a problem that Li is coprecipitated and lost during hydroxide precipitation for removing Al after leaching.

In one embodiment, the sulfuric acid aqueous solution containing lithium may satisfy the following Formula 2. <Formula 2> $0.05 \leq \left[Ni\right] = 0.1907 \times {\left[Li\right]}^{2} - 0.2689 \times \left[Li\right] \pm 3 \leq 16.0$ wherein, in Formula 2, [Li] and [Ni] mean concentrations (g/L) of Li and Ni, respectively, in the sulfuric acid aqueous solution containing lithium.

Formula 2 may be a relational expression for concentrations (g/L) of Li and Ni in the sulfuric acid aqueous solution. Formula 2 may specifically satisfy 0.05 to 16.0, and more specifically 0.3 to 7.5. When Formula 2 is satisfied, the sulfuric acid aqueous solution can be usefully applied to manufacture of LiOH used for manufacturing a high-nickel positive electrode active material, and has an advantage of reducing material costs due to a high-concentration lithium concentration.

When Formula 2 is outside the upper limit value of the above-described range, there is a problem that leaching of lithium is delayed and the lithium recovery rate decreases. When Formula 2 is outside the lower limit value of the above-described range, there is a problem that Li is coprecipitated and lost during hydroxide generation for removing Ni.

In one embodiment, the sulfuric acid aqueous solution containing lithium may satisfy the following Formula 3. <Formula 3> $0.05 \leq \left[Co\right] = 0.0624 \times {\left[Li\right]}^{2} - 0.1078 \times \left[Li\right] \pm 2 \leq 14.0$ wherein, in Formula 3, [Li] and [Co] mean concentrations (g/L) of Li and Co, respectively, in the sulfuric acid aqueous solution containing lithium.

Formula 3 may be a relational expression for concentrations (g/L) of Li and Co in the sulfuric acid aqueous solution containing lithium. Specifically, Formula 3 may satisfy 0.05 to 14.0, and more specifically 0.15 to 6.0. When Formula 3 is satisfied, the sulfuric acid aqueous solution can be usefully applied to manufacture of LiOH used for manufacturing a high-nickel positive electrode active material, and has an advantage of reducing material costs due to a high-concentration lithium concentration.

When Formula 3 is outside the upper limit value of the above-described range, there is a problem that leaching of lithium is delayed and the lithium recovery rate decreases. When Formula 3 is outside the lower limit value of the above-described range, there is a problem that Li is coprecipitated and lost during hydroxide generation for removing Co.

In one embodiment, the sulfuric acid aqueous solution containing lithium may satisfy the following Formula 4. <Formula 4> $0.1 \leq \left[Mn\right] = 0.0402 \times {\left[Li\right]}^{2} + 0.117 \times \left[Li\right] \pm 1 \leq 12.0$ wherein, in Formula 4, [Li] and [Mn] mean concentrations (g/L) of Li and Mn, respectively, in the sulfuric acid aqueous solution containing lithium.

Formula 4 may be a relational expression for concentrations (g/L) of Li and Mn in the sulfuric acid aqueous solution. Specifically, Formula 4 may satisfy 0.1 to 12.0, and more specifically 0.5 to 6.0. When Formula 4 is satisfied, the sulfuric acid aqueous solution can be usefully applied to manufacture of LiOH used for manufacturing a high-nickel positive electrode active material, and has an advantage of reducing material costs due to a high-concentration lithium concentration.

When Formula 4 is outside the upper limit value of the above-described range, there is a problem that leaching of lithium is delayed and the lithium recovery rate decreases. When Formula 4 is outside the lower limit value of the above-described range, there is a problem that Li is coprecipitated and lost during hydroxide generation for removing Mn.

As described above, since the content of lithium in the sulfuric acid aqueous solution containing lithium satisfies the above-described range, the sulfuric acid aqueous solution can be usefully applied to manufacture of a positive electrode active material precursor for a lithium secondary battery, which can easily achieve high capacity of a battery and has excellent structural stability.

The method for manufacturing a sulfuric acid aqueous solution containing lithium according to another embodiment of the present invention may include obtaining, from a waste battery, a composition for recovering valuable metals including a valuable metal alloy, a lithium compound, copper (Cu), and graphite; separating graphite from the composition for recovering valuable metals; sulfuric acid leaching valuable metals, the lithium compound, and copper (Cu) in the composition for recovering valuable metals; solid-liquid separating, in the leached sulfuric acid aqueous solution containing lithium, and recovering the valuable metals and copper (Cu); and removing residual impurities in the leached sulfuric acid aqueous solution containing lithium having undergone the recovering step.

The obtaining, from a waste battery, of the composition for recovering valuable metals including the valuable metal alloy, the lithium compound, copper (Cu), and graphite may include preparing a battery containing lithium (Li), shredding the battery, and heat-treating the shredded battery shredded material in a range of 600 to 1,500°C.

The preparing of the battery containing lithium (Li) may include a battery that has reached the end of its life, scraps constituting the waste battery, a jelly roll, positive electrode materials such as slurry, defective products generated in a manufacturing process, residues inside the manufacturing process, and waste cells such as generated debris, for example, waste materials in a manufacturing process of a lithium ion battery.

In one embodiment, the preparing of the battery containing lithium (Li) may include freezing the battery. Specifically, as a specific pressure is applied to the battery, a separator is physically shredded and a high current due to occurrence of a short circuit is formed, sparks are generated, and the sparks may ignite an electrolyte, thereby causing fire.

In the freezing of the battery, since a shredding process is performed after freezing the battery to suppress ignition of a liquid electrolyte included in the battery, a problem caused by ignition of the electrolyte does not occur.

In one embodiment, the freezing of the battery may be performed by cooling in a range of -150°C to -60°C. When the temperature is outside the upper limit value of the above temperature range, the voltage remaining inside the battery does not decrease to 0 V, and thus a battery reaction due to a short circuit may occur, and the electrolyte is not completely frozen, which is not appropriate.

When the temperature is outside the lower limit value of the above temperature range, the electrolyte is sufficiently frozen, and the voltage inside the battery also decreases to 0 V. Accordingly, even if a short circuit in which the positive electrode and the negative electrode directly contact each other occurs, a battery reaction does not occur, so that the battery temperature does not increase and gas generation and combustion of the electrolyte do not occur. In addition, since the electrolyte is in a frozen state, mobility of lithium ions is very low, electrical conduction characteristics due to movement of lithium ions can be remarkably reduced, and because vaporization of the electrolyte solution does not occur, combustible gases such as ethylene, propylene, and hydrogen may not be generated.

In the freezing of the battery, when the temperature is outside the upper limit value of the above temperature range, the voltage remaining inside the battery does not decrease to 0 V, and thus a battery reaction due to a short circuit may occur, and the electrolyte is not completely frozen, which is not appropriate. When the temperature is outside the lower limit value of the above temperature range, there is an uneconomical problem because a large amount of energy must be input for freezing.

In one embodiment, the freezing of the battery may be performed by cooling in a temperature range of -60°C to -20°C under a vacuum atmosphere condition of 100 torr or less. The freezing of the battery may be performed in the above temperature range, which is a temperature capable of suppressing vaporization of the electrolyte solution. The vacuum atmosphere may be, for example, an inert gas, carbon dioxide, nitrogen, water, or a combination thereof.

Since the pressure is adjusted to a vacuum atmosphere of 100 torr or less, oxygen supply can be suppressed, thereby preventing the electrolyte from reacting with oxygen, preventing explosion resulting therefrom, and suppressing vaporization of the electrolyte solution, so that combustible gases such as ethylene, propylene, and hydrogen may not be generated.

In the freezing of the battery, when the freezing is performed in an air atmosphere or at a pressure exceeding 100 torr, voltage may remain in the battery, and since the electrolyte is not in a frozen state in the temperature range of -60°C to -20°C, there is a problem that the electrolyte may be vaporized and explode due to sparks generated when a short circuit occurs due to the remaining voltage.

In one embodiment, the freezing of the battery is a battery processing method satisfying the following Formula 7. [Formula 6] $Minimum cooling time \left(Hr\right) = A \times \left({W}^{0.33}\right)$ (A = 4 × e^{(-0.02×dT)}, W = battery weight (kg), dT = |external cooling temperature - target temperature|, and | | means an absolute value)

In one embodiment, the freezing of the battery may include cooling the battery to -150°C to -20°C. In one embodiment, the preparing of the battery may include performing forced discharge.

The shredding of the battery may obtain pulverized material by using a shredder. As a non-limiting example, the shredding may include crushing the waste battery by applying physical or mechanical force and pulverizing it into powder. The shredding step may separate some large-sized impurities among impurities such as aluminum (Al), copper (Cu), iron (Fe), and plastic in components included in the waste battery. A state in which the large impurities are separated is called black powder, and battery shredded material such as black powder may be manufactured through the shredding step.

In one embodiment, the battery shredded material may include aluminum (Al), manganese (Mn), lithium (Li), copper (Cu), cobalt (Co), nickel (Ni), carbon (C), and residual impurities. In one embodiment, the black powder includes, in the case of nickel (Ni), 5 to 40 wt%, in the case of cobalt (Co), 1 to 20 wt%, in the case of manganese (Mn), 1 to 15 wt%, in the case of lithium (Li), 0.5 to 5 wt%, in the case of carbon (C), 10 to 70 wt%, in the case of aluminum (Al), 0.0001 to 20 wt%, and in the case of copper (Cu), 0.0001 to 20 wt%, and the total amount of impurities such as iron (Fe) and phosphorus (P) may be less than 10 wt%. The components of the black powder may vary according to a ratio of nickel, cobalt, and manganese, and when a lithium secondary battery is shredded, the nickel, cobalt, and manganese may be adjusted by the positive electrode material oxide in the lithium secondary battery.

In one embodiment, the shredding of the battery may be a shredding method using at least one of shearing, compression, and tensile force. Specifically, the shredding may be performed, for example, by at least one of a hammer mill, a ball mill, and a stirred ball mill. In the hammer mill, at least one step of disassembly, punching, and milling may be performed, and as a non-limiting example, it is apparent that pulverization may be performed using various types of shredding or pulverizing apparatuses, for example, an industrial pulverizer. In one embodiment, the particle diameter of the battery shredded material may be within 50 mm, specifically within 30 mm. When the particle diameter is greater than the above range, more energy supply is required in a heat treatment step to be described below, resulting in an uneconomical problem.

The heat-treating of the shredded battery shredded material in a range of 600 to 1,500°C may be dry heat-treating the battery shredded material. Specifically, the heat-treating may include introducing the shredded material into a furnace capable of raising the shredded material to a high temperature and raising the temperature of the shredded material to a temperature equal to or higher than a melting point. The dry heat-treating of the shredded material (S200) may involve heat treatment conditions for performing a high-temperature reduction reaction without passing through a melting step.

In one embodiment, the heat treatment conditions may involve heat treatment conditions in a range of 900 to 1,800°C. Specifically, the range may be performed in a range of 1,200 to 1,800°C, and more specifically 1,300 to 1,700°C. When the temperature is outside the upper limit value of the above range, there is a problem of loss due to vaporization of lithium, and when the temperature is outside the lower limit value of the above range, there is a problem that sintering and reduction of alloy elements do not proceed. In the above temperature range, a reduction reaction can be performed in a state in which generation of carbon dioxide is almost absent by minimally burning carbon in the shredded material.

In one embodiment, the dry heat-treating of the shredded material (S200) may be performed in a gas atmosphere of at least one of an inert gas, carbon dioxide, carbon monoxide, and a hydrocarbon gas. In the case of the inert gas, for example, the inert gas may include at least one of argon and nitrogen. By performing a reduction reaction of the shredded material in the gas atmosphere, an alloy for recovering valuable metals including valuable metals included in the shredded material as components can be effectively recovered.

In one embodiment, a part of the gas atmosphere may include impurities including residual oxygen. When the content of oxygen among the impurities is high, oxygen may combine with components of the shredded material in a reduction reaction process to form carbon dioxide, and accordingly, there is a problem that oxygen is gasified together with lithium and is difficult to recover.

In one embodiment, in the dry heat treatment step, an average oxygen partial pressure may be in a range of 0.01 to 1 atm. Specifically, when the partial pressure of oxygen is higher than the above value, there is a problem that lithium loss and a large amount of carbon dioxide occur in a local high-temperature state. When the partial pressure of oxygen is lower than the lower limit value of the above range, there is a problem of a decrease in Li recovery rate due to inferior generation of LiAlO₂.

Specifically, in the dry heat-treating step, as a composition for recovering valuable metals in which components such as nickel-, cobalt-, manganese-, and lithium-containing oxides in the shredded material are alloyed, the composition may include valuable metals and impurities as a balance. The composition for recovering valuable metals may include, for example, aluminum (Al), manganese (Mn), lithium (Li), copper (Cu), cobalt (Co), nickel (Ni), carbon (C), and residual impurities. Specifically, the composition for recovering valuable metals may include a valuable metal recovery alloy and a lithium compound. Specifically, the composition for recovering valuable metals may include a valuable metal alloy, a lithium compound, copper (Cu), and graphite.

The valuable metal recovery alloy may include, based on 100 wt% of an entire composition of the alloy, valuable metals in an amount of 45 wt% or more and impurities as a balance. The valuable metal recovery alloy may include at least one of valuable metals such as nickel (Ni), cobalt (Co), manganese (Mn), lithium (Li), carbon (C), aluminum (Al), and copper (Cu), and residual impurities. In the present specification, valuable metals may mean expensive metal components included in a battery, and may mean nickel, cobalt, manganese, aluminum, copper, and lithium. In one embodiment, the valuable metals may be 70 wt% or more.

In one embodiment, lithium (Li) among the valuable metals may be included in a range of 0.01 to 5 wt%. As lithium satisfies the above range, there is an advantage that the Li recovery rate can be maximized during a Li smelting process. When the content is outside the upper limit value of the above range, there is a problem that recovery rates of Ni and Co decrease. When the content is outside the lower limit value of the above range, there is a problem that the Li recovery rate decreases during the Li smelting process, thereby increasing process costs.

In one embodiment, the valuable metal recovery alloy may include copper (Cu) in an amount of 0.02 wt% or more. Specifically, the valuable metal recovery alloy may include copper in a range of 0.1 to 15 wt%. When the copper content is outside the upper limit value of the above range, there is a problem of process costs due to increased precipitation of CuSO₄ in leaching and solvent extraction, and when the copper content is outside the lower limit value of the above range, there is a problem of an increase in unreacted materials because formation of low-melting-point Ni-Co-Mn is difficult.

In one embodiment, the copper may form an alloy by bonding with nickel (Ni) among the valuable metals. In one embodiment, the nickel may be included in a range of 5 to 40 wt%. When the nickel is outside the upper limit value of the above range, there is a problem of a reduced leaching rate due to generation of nickel carbide (Ni₃C), and when the nickel is outside the lower limit value of the above range, there is a problem of a decrease in Ni recovery rate in leaching and solvent extraction.

In one embodiment, in the valuable metal recovery alloy, graphite may be 7 wt% or less. Specifically, the graphite content may be 1 to 6%, and more specifically 2 to 5 wt%. As the content of graphite in the valuable metal recovery alloy satisfies the above-described range, during acid leaching, the content of graphite is small, so that leaching efficiency can be improved, and CO₂ generation can be reduced through recovery of the graphite.

When the content is outside the upper limit value of the above range, the negative electrode material remains in an unreacted state, so that alloying is not properly performed, and there is a problem that it remains in the form of valuable metal oxides in the positive electrode material. When the content is outside the lower limit value of the above range, there is a problem that loss of lithium due to high temperature may occur.

In one embodiment, the valuable metal recovery alloy may include aluminum (Al) in a range of 0.25 to 30 wt%. When the aluminum content is outside the upper limit value of the above range, there is a problem of a decrease in recovery rates of Ni and Co during leaching and solvent extraction processes. When the aluminum content is outside the lower limit value of the above range, formation of LiAlO₂ is difficult, thereby causing a problem of a decrease in Li recovery rate.

The content of valuable metals in the composition for recovering valuable metals may include 45 wt%. Specifically, the composition for recovering valuable metals may include nickel as a basic component, and may include materials such as cobalt, manganese, copper, aluminum, and lithium.

In one embodiment, the lithium content in the composition may be included in a range of 0.1 to 10 wt%. Specifically, the lithium content in the composition may be included in a range of 8 to 10 wt%.

The lithium content in the composition may include not only the lithium content included in the valuable metal recovery alloy, but also the lithium content included in the lithium compound. When the lithium content is outside the upper limit value of the above range, there is a problem that lithium is lost by a process in which oxygen burns carbon, rather than an oxygen-free reaction, and thus recovery of lithium among expensive valuable metals in the battery becomes impossible. When the lithium content is outside the lower limit value of the above range, there is a problem such as a decrease in the recovery rate of valuable metals.

The lithium compound is a valuable metal reactant including a lithium compound including at least one of LiAlO₂, Li₅AlO₄, LiAl₅O₈, Li₂CO₃, LiF, Li₃PO₄, Li₄P₂O₇, LiPO₃, Li₂SiO₃, Li₄SiO₄, Li₂Si₂O₅, LiFeO₂, LiFe₅O₈, Li₃Fe₅O₈, and Li₅FeO₄, and may include lithium in which the content of Li among the compounds is 4 to 35% based on 100 wt% of the entirety. In one embodiment, at least a portion of the lithium compound may be disposed on the valuable metal alloy. Specifically, at least a portion of the lithium compound may be bonded as a compound by mutual physical or chemical bonding between lithium and aluminum included in the composition.

For example, when valuable metals are recovered from a waste battery, the valuable metals in the waste battery are present in the form of oxides, and reduction occurs by graphite in the negative electrode material at the process temperature and oxygen atmosphere of the present invention to be described below. At this time, copper serving as a current collector is melted and present in a liquid state and may serve to agglomerate reduced valuable metals. Aluminum of the current collector and another current collector participates in a partial reduction reaction with the positive electrode material oxide, and the remainder reacts with lithium and may remain as a lithium-aluminum oxide. Specifically, the composition for recovering valuable metals may include a lithium compound, and the lithium compound may be manufactured by the reduction reaction. For example, the lithium compound may be lithium-aluminate (2LiAlO₂).

The graphite may be composed of a graphite material having a graphitization degree of 50% or more and a total weight ratio of 70% or more.

In the step of separating graphite from the composition for recovering valuable metals, during sulfuric acid leaching, the graphite is not dissolved, has hydrophobic characteristics, and powder including a valuable metal alloy containing sulfuric acid and nickel may float between graphite particles and be lost. In order to prevent this, a step of removing graphite in advance from the composition for recovering valuable metals may be performed.

In one embodiment, the step of separating graphite from the composition for recovering valuable metals may be performed through at least one of particle-size separation, specific-gravity separation, and flotation.

The sulfuric acid leaching of the valuable metals, the lithium compound, and copper (Cu) in the composition for recovering valuable metals may be performed at a pH of the sulfuric acid aqueous solution containing lithium of 0.2 to 4.0, specifically 0.5 to 3.0, and more specifically 0.8 to 2.0. When the pH satisfies the above range, selective leaching of Li is excellent.

When the pH is outside the upper limit value of the above-described range, there is a problem that leaching of lithium is delayed and the lithium recovery rate decreases. When the pH is outside the lower limit value of the above-described range, there is a problem that valuable metals and copper are excessively leached.

In the sulfuric acid leaching of the valuable metals, the lithium compound, and copper (Cu) in the composition for recovering valuable metals, the equivalent ratio of sulfuric acid may be 0.5 to 4.0, specifically 0.8 to 3.5, and more specifically 1.0 to 3.0. When the sulfuric acid equivalent ratio satisfies the above range, the leaching rate of the valuable metal recovery alloy can be increased while minimizing the content of sulfuric acid.

When the sulfuric acid equivalent ratio is outside the upper limit value of the above-described range, there is a problem that valuable metals and copper are excessively leached. When the sulfuric acid equivalent ratio is outside the lower limit value of the above-described range, there is a problem that leaching of lithium is delayed and the lithium recovery rate decreases.

The temperature at which the sulfuric acid leaching of the valuable metal recovery alloy is performed may be 10 to 150°C, specifically 20 to 120°C, and more specifically 40 to 90°C. When the performing temperature satisfies the above range, the leaching efficiency is excellent while boiling over of sulfuric acid is suppressed.

When the performing temperature is outside the upper limit value of the above-described range, there is a problem that valuable metals and copper are excessively leached. When the performing temperature is outside the lower limit value of the above-described range, there is a problem that leaching of lithium is delayed and the lithium recovery rate decreases.

The sulfuric acid leaching of the valuable metal recovery alloy, the lithium compound, and Cu may be performed while supplying an inert gas at a supply rate of 0.1 to 20.0 Nm³/hr, specifically 1 to 15 Nm³/hr, and more specifically 3 to 8 Nm³/hr. As the inert gas, nitrogen, argon, helium, and the like may be applied. When oxygen is introduced within the supply rate range, the selective leaching rate of Li can be accelerated in the process of leaching the valuable metal recovery alloy.

When the supply rate of the gas is outside the upper limit value of the above-described range, there is a problem that valuable metals and copper are excessively leached. When the supply rate of the gas is outside the lower limit value of the above-described range, there is a problem that leaching of lithium is delayed and the lithium recovery rate decreases.

In the step of solid-liquid separating, in the leached sulfuric acid aqueous solution containing lithium, and recovering the valuable metals and copper (Cu), the sulfuric acid aqueous solution containing lithium in which lithium has been leached may be separated as a liquid phase, and the valuable metals and copper (Cu) may be separated as a solid phase.

In one embodiment, the step of solid-liquid separating, in the leached sulfuric acid aqueous solution containing lithium, and recovering the valuable metals and copper (Cu) may include, after the solid-liquid separation, magnetic separation for separating valuable metals and Cu. By further including a magnetic separation step after the solid-liquid separation step, copper can be more easily recovered.

In one embodiment, between sulfuric acid leaching the valuable metals, the lithium compound, and copper (Cu) in the composition for recovering valuable metals and solid-liquid separating, in the leached sulfuric acid aqueous solution containing lithium, and recovering the valuable metals and copper (Cu), the method may include adding sodium hydroxide (NaOH) to remove impurities in the sulfuric acid aqueous solution containing lithium.

In one embodiment, removing impurities in the sulfuric acid aqueous solution may control the pH of the sulfuric acid aqueous solution to 3.0 to 8.0. Specifically, the pH may be 4.0 to 7.0. The removing of impurities in the sulfuric acid aqueous solution may be a step for manufacturing a sulfuric acid aqueous solution containing high-concentration lithium by removing impurities in the sulfuric acid aqueous solution before performing a solid-liquid separation process. Specifically, the impurities may include, for example, at least one element among Ni, Co, Mn, Cu, Ti, Zn, Pb, P, Ca, Mg, B, K, Na, Si, and Fe.

The step of removing residual impurities in the leached sulfuric acid aqueous solution containing lithium having undergone the recovering step may remove impurities remaining in the sulfuric acid aqueous solution containing lithium recovered by solid-liquid separation, for example, elements such as Mg or Ca.

In one embodiment, the removing of residual impurities in the leached sulfuric acid aqueous solution containing lithium having undergone the recovering step may adjust the pH of the sulfuric acid aqueous solution containing lithium to a range of 8.5 to 12.0. Specifically, the pH may be 9.0 to 11.0. As the pH satisfies the above-described range, residual impurities such as Ca and Mg in lithium sulfate can be easily removed, thereby providing a sulfuric acid aqueous solution containing lithium having a high concentration of lithium.

In one embodiment, between solid-liquid separating, in the leached sulfuric acid aqueous solution containing lithium, and recovering the valuable metals and copper (Cu) and removing residual impurities in the leached sulfuric acid aqueous solution containing lithium having undergone the recovering step, the method may include removing impurities by an ion exchange method.

The step of removing impurities by the ion exchange method may be a step of removing elements such as Zr, T, B, or F remaining in a small amount in the sulfuric acid aqueous solution containing lithium recovered by solid-liquid separation.

Hereinafter, embodiments of the present invention will be described in detail. However, these are presented as examples, and the present invention is not limited thereby, and the present invention is defined only by the scope of the claims to be described below.

### <Experimental Example>

### Manufacture of Composition for Recovering Valuable Metals

### <Internal Battery Temperature According to Minimum Freezing Time>

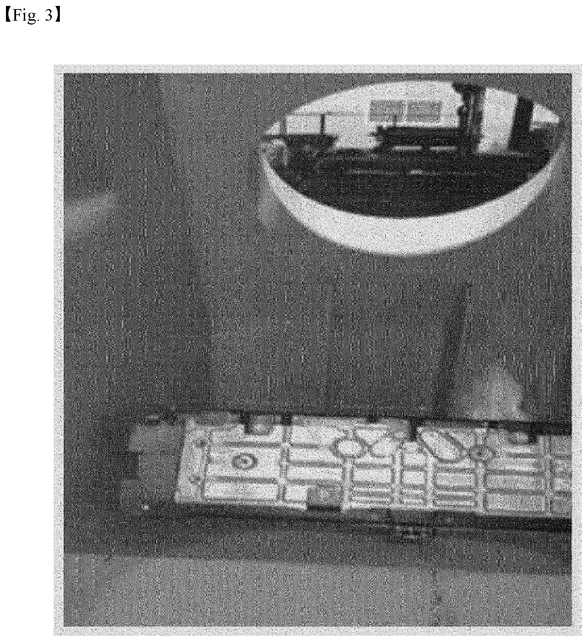

A battery pack used in the Example was shredded without freezing using the same shredder as in the Example. During the shredding process, as shown in FIGS. 3A and 3B, flames were generated due to a short circuit. At this time, the battery used was a 622NCM battery.

As described above, through the Examples and Comparative Examples, it can be confirmed that, by including the step of freezing the battery pack including the battery before shredding the battery, stability is excellent because a short circuit does not occur and flames are not generated in the battery shredding step.

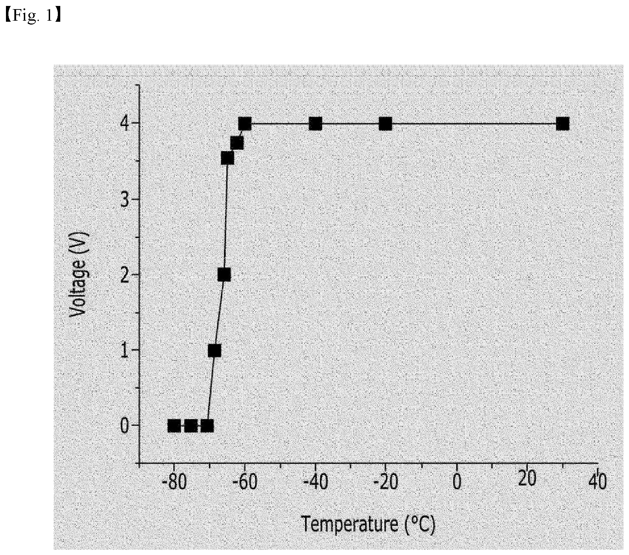

FIG. 1 shows a change in voltage of a battery according to cooling temperature according to one embodiment of the present invention.

Referring to FIG. 1, when the battery is frozen to -80°C and the battery voltage is measured, the battery pack exhibits almost the same voltage at a high temperature of about 40°C, at room temperature, and up to -60°C, and thus it can be confirmed that battery characteristics are not lost. Subsequently, when the temperature decreases from -60°C to -70°C, the voltage rapidly decreases, and it was confirmed that the voltage becomes 0 below -70°C. As described above, it was confirmed that, when the battery is frozen to -60 to -150°C, a short circuit does not occur.

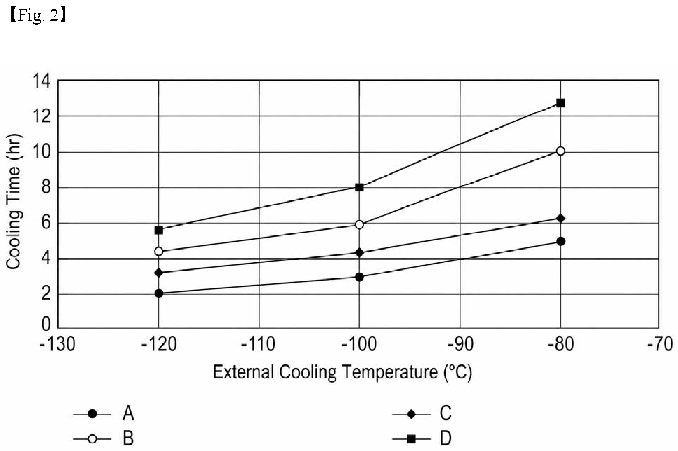

FIG. 2 is a graph showing a relationship among battery weight, external cooling temperature, and cooling time according to one embodiment of the present invention.

Referring to FIG. 2, it can be confirmed that, in the battery processing method according to one embodiment of the present invention, in the step of freezing the battery, a minimum cooling time for cooling the battery can be derived. Specifically, it can be confirmed that the minimum cooling time is related to the battery weight, the external cooling temperature, and the target temperature.

More specifically, FIG. 2 shows the external cooling temperature and the minimum cooling time when the target temperature is set to -70°C and the battery weights are 2.5 kg (A), 10 kg (B), 20 kg (C), and 50 kg (D), respectively. When the battery is cooled, it can be confirmed that the electrolyte solution of the battery starts to be cooled after a predetermined time has elapsed, and the voltage becomes 0. Through this, it can be confirmed that, when cooling the battery, a minimum holding time is required to sufficiently cool the inside, specifically, up to the electrolyte solution.

Specifically, in a heat transfer situation for cooling in which heat is taken away to the outside, when considering the specific heat of the battery itself, it can be confirmed that the battery weight and time for cooling are required. As described above, in the present invention, in order to cool the battery, the minimum time required for cooling can be confirmed using the external cooling temperature for freezing, the target temperature, and the battery weight.

Table 1 below describes the minimum cooling time according to battery weight and external cooling temperature.

**[Table 1]**

| | Battery Weight [kg] | External Cooling Temperature [°C] | Target Temperature [°C] | Formula 2 | Minimum Cooling Time [h] |
|---|---|---|---|---|---|
| A_1 | 2.5 | -120 | -70 | 1.9 | 1.9 |
| A_2 | 2.5 | -100 | -70 | 2.9 | 2.9 |
| A_3 | 2.5 | -80 | -70 | 4.4 | 4.4 |
| B_1 | 10 | -120 | -70 | 3.1 | 3.1 |
| B_2 | 10 | -100 | -70 | 4.6 | 4.6 |
| B_3 | 10 | -80 | -70 | 7.0 | 7.0 |
| C_1 | 20 | -120 | -70 | 3.9 | 3.9 |
| C_2 | 20 | -100 | -70 | 5.8 | 5.8 |
| C_3 | 20 | -80 | -70 | 8.8 | 8.8 |
| D_1 | 50 | -120 | -70 | 5.3 | 5.3 |
| D_2 | 50 | -100 | -70 | 7.9 | 7.9 |
| D_3 | 50 | -80 | -70 | 11.9 | 11.9 |

Referring to Table 1, it can be confirmed that, as the battery weight decreases, the minimum cooling time of the battery to be cooled is further reduced. In addition, it can be confirmed that, when cooling is performed using the value of Formula 2 derived from the relational expression according to the battery weight, external cooling temperature, and target temperature as the minimum cooling time, the battery, specifically, up to the electrolyte of the battery, is cooled. In addition, when the battery is cooled for a time equal to or longer than the value of Formula 2, fire does not occur in a subsequent process, that is, in a process of pulverizing the battery.

FIGS. 3A and 3B are photographs in which fire occurred when shredding was performed after freezing for a time shorter than a minimum cooling time according to a Comparative Example of the present invention, and FIGS. 3C and 3D are photographs of an Example in which fire did not occur when shredding was performed after freezing for a time longer than the minimum cooling time according to an Example of the present invention.

Referring to FIGS. 3A and 3B, an experiment was performed on the fire occurrence state of shredded material when the battery was frozen for a time shorter than the minimum cooling time required for cooling. In the experiment, when the battery weight was 25 kg, the external cooling temperature was -95°C, and the target freezing temperature was -70°C, and the value of the following Formula 2 was 7 hours, the experiment was performed for 5 hours, which is lower than the value of Formula 2. <Formula 2> $Minimum cooling time = A \times \left({W}^{0.33}\right)$ wherein, in Formula 2, A = 4 × e^{(-0.02×dT)}, W = battery weight (kg), dT = |external cooling temperature - target temperature|, and | | means an absolute value.

Referring to FIGS. 3C and 3D, an experiment was performed on the fire occurrence state of shredded material when the battery was frozen for a minimum freezing time or longer required for cooling. In the experiment, the same battery weight, external cooling temperature, and minimum freezing time as in FIGS. 3A and 3B were used, and the minimum freezing time was set to 7 hours or longer.

Table 2 below compares fire occurrence states of an Example and a Comparative Example according to the same battery weight, external cooling temperature, and minimum freezing time according to FIGS. 3A to 3D. The fire occurrence state was determined as "O" when fire occurrence was observed after battery shredding, and otherwise as "X."

**[Table 2]**

| | Battery Weight [kg] | External Cooling Temperature [°C] | Target Temperature [°C] | Formula 2 | Actual Cooling Time [h] | Fire Occurrence |
|---|---|---|---|---|---|---|
| Comparative Example | 25 | - 95 | - 70 | 7.0 | 5 | O |
| Example | 25 | - 95 | - 70 | 7.0 | 7 | X |

Referring to Table 2, it can be confirmed that, when the battery is cooled for a value smaller than the value of Formula 2 corresponding to the minimum cooling time, the electrolyte is not cooled and fire occurs after battery shredding. As described above, when the battery is cooled using the value of Formula 2 as the minimum cooling time, it can be confirmed that shredded material can be stably utilized after battery shredding without fire occurrence.

### <Calcination Heat Treatment of Battery Shredded Material>

In the step of calcination heat-treating the battery shredded material, dry heat treatment was performed in a temperature range of 700 to 1,350°C under a condition of oxygen of 5 vol% or less. Specifically, the calcination heat treatment in this experiment was performed in a dry manner in a temperature range of 900 to 1,200°C, specifically about 1,100°C, under a condition of oxygen of about 3 vol% or less, thereby obtaining a composition for recovering valuable metals.

At this time, the size of the battery shredded material was 10 to 20 mm based on a major axis among width, length, and height, the graphite content was 5% or more, and the impurity content of plastic or iron pieces such as an Al cover and a PCB substrate of the shredded material was less than 5%.

The composition for recovering valuable metals manufactured through the calcination heat-treating step was manufactured as a valuable metal alloy in which a core portion including valuable metals and a compound including lithium disposed on the core portion are disposed in a shell portion, a lithium compound, copper, and graphite.

### <Separation from Composition for Recovering Valuable Metals>

The composition for recovering valuable metals obtained through the high-temperature reduction process was separated into a magnetic material and a non-magnetic material using a magnetic separator having a magnetic force intensity of 3000 gauss.

Thereafter, flotation was performed on the non-magnetic material separated through the magnetic separation using Denver Sub-A flotation equipment at a pulp density of 30%, an impeller rotation speed of 500 rpm, kerosene of 0.1 ml/100 g, and MIBC of 0.1 ml/100 g. Through the flotation, lightweight graphite powder floated to the upper portion of the slurry, and the graphite was separated and recovered.

Through the flotation process, graphite was separated as a floating material, and a material containing lithium was separated and recovered as a precipitate.

Thereafter, the magnetic material having undergone magnetic separation was subjected to a pulverization step using Attrition Mill equipment, which is a vertical stirring-type mill, under conditions of 500 rpm, impeller tip speed of 2.8 m/sec, pulverization time of 60 minutes, and solid content weight of 30%. It was confirmed that, in the magnetic material, a reactant composed of a core portion including valuable metals and a shell portion including a compound containing lithium disposed on the core portion was separated into the core portion and the shell portion through the pulverization process. In order to further separate the result having undergone the pulverization process into an alloy core portion containing valuable metals and a lithium compound, a magnetic material and a non-magnetic material were separated using a magnetic separator having a magnetic force intensity of 3000 gauss.

Thereafter, particle-size separation was performed using a mesh having a mesh size of 75 µm to recover a NCM alloy portion, which is coarse particles, and Li oxide, which is fine particles.

The valuable metal-containing alloy, lithium compound, and Cu obtained through the above-described magnetic separation, flotation, and particle-size separation were obtained.

### <Selective Leaching Step of Lithium>

A valuable metal-containing alloy, a lithium compound, and Cu were obtained through the high-temperature heat treatment process, and lithium (Li) was selectively leached from the valuable metal-containing alloy, the lithium compound, and Cu through sulfuric acid leaching. The leaching of lithium may be explained by the following reaction formulas.

[Reaction Formula 1] Ni(s)+H₂SO₄(aq) = NiSO₄(aq)+H₂(g), ΔG°m = -46.3 (kJ/mol)

[Reaction Formula 2] Co(s)+H₂SO₄(aq) = CoSO₄(aq)+H₂(g), ΔG°m = -54.7 (kJ/mol)

[Reaction Formula 3] Li₂O(s)+H₂SO₄(aq) = Li₂SO₄(aq)+H₂O(aq), ΔG°m = -260.5 (kJ/mol)

[Reaction Formula 4] Cu(s)+H₂SO₄(aq) = CuSO₄(aq)+H₂(g), ΔG°m = 69.5 (kJ/mol)

According to Reaction Formulas 1 and 2, when Ni and Co are leached in sulfuric acid, Gibbs free energy is -46 to -53 kJ/mol, which is as low as about 20% compared with -260.5 kJ/mol, which is Gibbs free energy when lithium oxide is leached in sulfuric acid, and thus it can be confirmed that the leaching reaction is not accelerated. In the case of Cu, Gibbs free energy is 69.5 kJ/mol, which is higher than those of Ni, Co, and Li, and thus it can be confirmed that leaching in sulfuric acid is not easy.

Selective lithium leaching was performed for 120 minutes on the lithium-containing alloy and lithium compound secured through high-temperature heat treatment under conditions of pH = 0.4 to 2.0, a temperature of 50°C, and a sulfuric acid equivalent ratio of 0.8 to 2.0 M. At this time, an experiment was performed such that, assuming that the leaching rate of lithium in the sulfuric acid aqueous solution was 100%, the concentration became 6 g/L.

Tables 3 to 5 below show lithium leaching result values over time when the sulfuric acid equivalent ratios were 1.0 M, 1.2 M, and 1.6 M, respectively. Specifically, Table 3 shows selective Li leaching results (g/L) over time (sulfuric acid equivalent ratio = 1.0 M, temperature = 50°C), Table 4 shows selective Li leaching results (g/L) over time (sulfuric acid equivalent ratio = 1.2 M, temperature = 50°C), and Table 5 shows selective Li leaching results (g/L) over time (sulfuric acid equivalent ratio = 1.6 M, temperature = 50°C).

**[Table 3]**

| **Time (min)** | **Li** | **Al** | **Ni** | **Co** | **Mn** | **Cu** |
|---|---|---|---|---|---|---|
| 0 | 0 | 0 | 0 | 0 | 0 | 0 |
| 30 | 4.15 | 5.99 | 2.19 | 0.64 | 1.17 | 0.11 |
| 60 | 4.89 | 7.72 | 3.29 | 0.96 | 1.49 | 0.18 |
| 90 | 5.45 | 8.64 | 3.98 | 1.17 | 1.68 | 0.24 |
| 120 | 5.81 | 9.20 | 4.46 | 1.31 | 1.79 | 0.28 |

**[Table 4]**

| **Time (min)** | **Li** | **Al** | **Ni** | **Co** | **Mn** | **Cu** |
|---|---|---|---|---|---|---|
| 0 | 0 | 0 | 0 | 0 | 0 | 0 |
| 30 | 4.18 | 5.45 | 2.09 | 0.61 | 1.13 | 0.24 |
| 60 | 5.04 | 7.85 | 3.51 | 1.03 | 1.578 | 0.31 |
| 90 | 5.42 | 8.89 | 4.26 | 1.25 | 1.80 | 0.48 |
| 120 | 5.88 | 9.74 | 4.67 | 1.44 | 1.97 | 0.65 |

**[Table 5]**

| **Time (min)** | **Li** | **Al** | **Ni** | **Co** | **Mn** | **Cu** |
|---|---|---|---|---|---|---|
| 0 | 0 | 0 | 0 | 0 | 0 | 0 |
| 30 | 4.28 | 4.72 | 0.76 | 0.33 | 1.60 | 0.31 |
| 60 | 5.17 | 7.57 | 1.52 | 0.59 | 1.76 | 0.38 |
| 90 | 5.68 | 9.06 | 2.43 | 0.90 | 1.93 | 0.59 |
| 120 | 5.99 | 9.82 | 3.55 | 1.27 | 2.22 | 0.81 |

Referring to Tables 3 to 5, it can be confirmed that, when lithium was leached at a temperature of 50°C within 120 minutes, a lithium leaching rate of 94 to 99% or more could be secured depending on the sulfuric acid equivalent ratio. In addition, at the same time, it was confirmed that leaching concentrations of Ni, Co, and Mn could be controlled to 5 g/L or less, and the leaching concentration of Cu could be controlled to 1 g/L or less.

### <Removal of Impurities in Lithium-Containing Sulfuric Acid Aqueous Solution>

The sulfuric acid aqueous solution containing lithium that had undergone the above-described lithium leaching process includes Ni, Co, Mn, Cu, Ti, Zn, Pb, P, Ca, Mg, B, K, Na, Si, and Fe impurities. In order to remove impurities in the sulfuric acid aqueous solution from the impurities, an impurity removal process was performed.

In order to remove impurities in the sulfuric acid aqueous solution, the lithium-containing sulfuric acid aqueous solution secured through the sulfuric acid leaching process of the sulfuric acid aqueous solution containing lithium was adjusted to a pH of 3.0 to 8.0 by adding sodium hydroxide (NaOH) into the sulfuric acid aqueous solution, based on the following Reaction Formulas 5 and 6. By adjusting the sulfuric acid aqueous solution to the above-described pH range, Ni, Co, Mn, Cu, Ti, Zn, Pb, P, Ca, Mg, B, K, Na, Si, and Fe impurities remaining in the sulfuric acid aqueous solution were removed.

[Reaction Formula 5] Me₂(SO₄)₃(aq) + 6NaOH = 2Me(OH)₃(s)+3Na₂SO₄(aq)+H₂SO₄(aq) (Me = Fe, Al, Ti)

[Reaction Formula 6] MeSO₄(aq) + 2NaOH = Me(OH)₂(s)+Na₂SO₄(aq)+H₂SO₄(aq) (Me = Ni, Co, Mn, Cu, Zn, Pb)

### <Solid-Liquid Separation>

Solid-liquid separation was performed to separate precipitated materials in the sulfuric acid aqueous solution from which the above-described impurities had been removed. Through the solid-liquid separation, precipitates precipitated in the sulfuric acid aqueous solution were separated, and a high-purity lithium-containing sulfuric acid aqueous solution was separately separated.

### <Additional Impurity Removal>

Thereafter, a process of removing, by an ion exchange method, impurities such as Zr, T, B, and F remaining in a small amount in the solid-liquid separated sulfuric acid aqueous solution was performed. Thereafter, in order to further remove impurities such as Ca and Mg remaining in the sulfuric acid aqueous solution, the pH of the sulfuric acid aqueous solution was adjusted to 8.5 to 12.0, thereby manufacturing a high-purity Ni-containing sulfuric acid aqueous solution.

Table 6 below shows concentrations of the lithium-containing sulfuric acid aqueous solution having undergone the lithium leaching step and the impurity removal step.

**[Table 6]**

| **Classification (g/L)** | **Li** | **Al** | **Ni** | **Co** | **Mn** | **Cu** | **Fe** | **Ti** | **Ca** | **Mg** | **Zn** | **Pb** |
|---|---|---|---|---|---|---|---|---|---|---|---|---|
| **After leaching** | 5.99 | 9.82 | 3.55 | 1.27 | 2.22 | 0.81 | 0.05 | 0.02 | 0.26 | 0.11 | 0.005 | 0.004 |
| **After impurity removal** | 5.90 | 0.003 | 0.001 | 0.001 | 0.002 | 0.002 | 0.001 | 0.001 | 0.004 | 0.003 | 0.001 | 0.001 |

Referring to Table 6, it was confirmed that the sulfuric acid aqueous solution containing lithium of the present invention has a high concentration of lithium and a low concentration of impurities, and thus a high-purity sulfuric acid aqueous solution usable for manufacturing a raw material of a lithium secondary battery, specifically, a positive electrode material, was manufactured.

Table 7 below compares concentrations of the lithium-containing sulfuric acid aqueous solution of the present invention, a sulfuric acid aqueous solution extracted from spodumene, and a trial product of a sulfuric acid aqueous solution containing lithium generally used when manufacturing a positive electrode material.

**[Table 7]**

| **Classification (g/L)** | **Li** | **Al** | **Ni** | **Co** | **Mn** | **Formula 1** | **Formula 2** | **Formula 3** | **Formula 4** | **Remarks** |
|---|---|---|---|---|---|---|---|---|---|---|
| **Example** | 5.99 | 9.82 | 3.55 | 1.27 | 2.22 | O | O | O | O | Waste battery extract |
| **Comparative Example** | 7.5 | 54.8 | 0.004 | 0.006 | 0.2 | X | X | X | X | Spodumene extract |
| **Comparative Example** | 4.8 | 0.5 | 21.4 | 10.2 | 9.7 | X | X | X | X | Black mass (trial product) |

Referring to Table 7, it can be confirmed that the lithium-containing sulfuric acid aqueous solution recovered from a waste battery as in the present invention satisfies Formulas 1 to 4, which are characteristics of the present invention. In contrast, it was confirmed that the sulfuric acid aqueous solution extracted through a leaching process from spodumene and a generally recovered black mass trial product do not satisfy Formulas 1 to 4, which are characteristics of the present invention. In addition, the lithium-containing sulfuric acid aqueous solution recovered from a waste battery of the present invention has a high lithium content relative to the aluminum content compared with the spodumene extract of the Comparative Example, and thus has an advantage in solid-liquid separation because the generation amount of aluminum hydroxide is small during solid-liquid separation. Compared with the black mass of the Comparative Example, it can be confirmed that the lithium-containing sulfuric acid aqueous solution recovered from a waste battery of the present invention has a high lithium content. In addition, since the lithium content is high relative to the contents of Ni, Co, and Mn in the sulfuric acid aqueous solution, there is an advantage that, when impurities are removed by addition of NaOH, loss of Ni, Co, and Mn can be reduced compared with black mass having high contents of Ni, Co, and Mn.

Although preferred embodiments have been described above in detail, the scope of the present invention is not limited thereto, and various modifications and improvements made by those skilled in the art using the basic concept defined in the following claims also fall within the scope of the present invention.

## Claims

1. A method for manufacturing a sulfuric acid aqueous solution containing lithium, comprising:
obtaining, from a waste battery, a composition for recovering valuable metals including a valuable metal alloy, a lithium compound, copper (Cu), and graphite;
separating graphite from the composition for recovering valuable metals;
sulfuric acid leaching valuable metals, the lithium compound, and copper (Cu) in the composition for recovering valuable metals;
solid-liquid separating, in the leached sulfuric acid aqueous solution containing lithium, and recovering the valuable metals and copper (Cu); and
removing residual impurities in the leached sulfuric acid aqueous solution containing lithium having undergone the recovering step.

2. The method for manufacturing a sulfuric acid aqueous solution containing lithium of claim 1,
wherein at least a portion of the lithium compound contains lithium disposed on the valuable metal alloy.

3. The method for manufacturing a sulfuric acid aqueous solution containing lithium of claim 1,
wherein obtaining the composition for recovering valuable metals comprises:
preparing a battery containing lithium (Li);
shredding the battery; and
heat-treating the shredded battery shredded material in a range of 600 to 1,500°C.

4. The method for manufacturing a sulfuric acid aqueous solution containing lithium of claim 3,
wherein heat-treating the shredded battery shredded material in a range of 600 to 1,500°C is performed in an oxygen concentration range of 0.1 to 2.0 vol%.

5. The method for manufacturing a sulfuric acid aqueous solution containing lithium of claim 3,
wherein separating graphite from the composition for recovering valuable metals is performed by at least one method among particle-size separation, specific-gravity separation, and flotation.

6. The method for manufacturing a sulfuric acid aqueous solution containing lithium of claim 1,
wherein sulfuric acid leaching the valuable metals, the lithium compound, and copper (Cu) in the composition for recovering valuable metals controls a pH of the sulfuric acid aqueous solution containing lithium to a range of 0.2 to 4.0.

7. The method for manufacturing a sulfuric acid aqueous solution containing lithium of claim 1,
wherein, in sulfuric acid leaching the valuable metals, the lithium compound, and copper (Cu) in the composition for recovering valuable metals, an equivalent ratio of the sulfuric acid is 0.5 to 4.0.

8. The method for manufacturing a sulfuric acid aqueous solution containing lithium of claim 1,
wherein sulfuric acid leaching the valuable metals, the lithium compound, and copper (Cu) in the composition for recovering valuable metals is performed in a temperature range of 10 to 150°C.

9. The method for manufacturing a sulfuric acid aqueous solution containing lithium of claim 1,
wherein sulfuric acid leaching the valuable metals, the lithium compound, and copper (Cu) in the composition for recovering valuable metals supplies an inert gas at a supply rate of 0.1 to 20.0 Nm³/hr.

10. The method for manufacturing a sulfuric acid aqueous solution containing lithium of claim 1,
further comprising, between sulfuric acid leaching the valuable metals, the lithium compound, and copper (Cu) in the composition for recovering valuable metals and solid-liquid separating, in the leached sulfuric acid aqueous solution containing lithium, and recovering the valuable metals and copper (Cu),
adding sodium hydroxide (NaOH) to remove impurities in the sulfuric acid aqueous solution containing lithium.

11. The method for manufacturing a sulfuric acid aqueous solution containing lithium of claim 10,
wherein removing impurities in the sulfuric acid aqueous solution controls a pH of the sulfuric acid aqueous solution to 3.0 to 8.0.

12. The method for manufacturing a sulfuric acid aqueous solution containing lithium of claim 1,
further comprising, between solid-liquid separating, in the leached sulfuric acid aqueous solution containing lithium, and recovering the valuable metals and copper (Cu) and removing residual impurities in the leached sulfuric acid aqueous solution containing lithium having undergone the recovering step,
removing impurities by an ion exchange method.

13. The method for manufacturing a sulfuric acid aqueous solution containing lithium of claim 1,
wherein removing residual impurities in the leached sulfuric acid aqueous solution containing lithium having undergone the recovering step adjusts a pH of the sulfuric acid aqueous solution containing lithium to a range of 8.5 to 12.0.

14. The method for manufacturing a sulfuric acid aqueous solution containing lithium of claim 3,
wherein preparing the battery containing lithium (Li) comprises freezing the battery.

15. A sulfuric acid aqueous solution containing lithium, recovered from a waste battery, comprising:
lithium (Li), aluminum (Al), nickel (Ni), cobalt (Co), manganese (Mn), and impurities as a balance,
wherein the sulfuric acid aqueous solution containing lithium satisfies the following Formula 1: <Formula 1> $1.0 \leq \left[Al\right] = 0.0297 \times {\left[Li\right]}^{2} + 1.3205 \times \left[Li\right] \pm 5 \leq 16.0$
wherein, in Formula 1, [Li] and [Al] mean concentrations (g/L) of Li and Al, respectively, in the sulfuric acid aqueous solution containing lithium.

16. The sulfuric acid aqueous solution containing lithium of claim 15,
wherein the sulfuric acid aqueous solution satisfies the following Formula 2: <Formula 2> $0.05 \leq \left[Ni\right] = 0.1907 \times {\left[Li\right]}^{2} - 0.2689 \times \left[Li\right] \pm 3 \leq 16.0$
wherein, in Formula 2, [Li] and [Ni] mean concentrations (g/L) of Li and Ni, respectively, in the sulfuric acid aqueous solution containing lithium.

17. The sulfuric acid aqueous solution containing lithium of claim 15,
wherein the sulfuric acid aqueous solution satisfies the following Formula 3: <Formula 3> $0.05 \leq \left[Co\right] = 0.0624 \times {\left[Li\right]}^{2} - 0.1078 \times \left[Li\right] \pm 2 \leq 14.0$
wherein, in Formula 3, [Li] and [Co] mean concentrations (g/L) of Li and Co, respectively, in the sulfuric acid aqueous solution containing lithium.

18. The sulfuric acid aqueous solution containing lithium of claim 15,
wherein the sulfuric acid aqueous solution satisfies the following Formula 4: <Formula 4> $0.1 \leq \left[Mn\right] = 0.0402 \times {\left[Li\right]}^{2} + 0.117 \times \left[Li\right] \pm 1 \leq 12.0$
wherein, in Formula 4, [Li] and [Mn] mean concentrations (g/L) of Li and Mn, respectively, in the sulfuric acid aqueous solution containing lithium.
